(19) Europäisches Patentamt
European Patent Office
Office européen des brevets

(11) Publication number: 0 309 730 A1

# (12) EUROPEAN PATENT APPLICATION

(21) Application number: 88113701.2

(22) Date of filing: 23.08.88

(51) Int. Cl.4: C08K 5/21 , C08K 5/37 , C08L 57/08 , C08L 33/08

(30) Priority: 28.09.87 US 101630

(43) Date of publication of application: 05.04.89 Bulletin 89/14

(84) Designated Contracting States: AT BE CH DE ES FR GB GR IT LI NL SE

(71) Applicant: AMERICAN CYANAMID COMPANY
1937 West Main Street P.O. Box 60
Stamford Connecticut 06904-0060(US)

(72) Inventor: Chang, Eugene Yue-Chieh
532 Rolling Hills Road
Bridgewater New Jersey 08807(US)
Inventor: Megna, Ignazio Salvatore
RD4 Box 24B Woods Road
Lebanon New JErsey 08833(US)
Inventor: Cody, Robert Dennis
Baptist Church Road RD1, P. O. Box 336A
Hampton New Jersey 08827(US)

(74) Representative: Wächtershäuser, Günter, Dr.
Tal 29
D-8000 München 2(DE)

## (54) Vulcanization system for halogen-containing elastomers.

(57) A vulcanizable elastomer composition having active-halogen groups contains as a vulcanization system trithiocyanuric acid and latent accelerator comprising a substituted urea or poly(urea) compound.

EP 0 309 730 A1

# VULCANIZATION SYSTEM FOR HALOGEN-CONTAINING ELASTOMERS

## FIELD OF THE INVENTION

This invention relates to elastomers and, more particularly, to a vulcanizable composition containing an elastomer having active-halogen groups, along with trithiocyanuric acid and a latent accelerator comprising a substituted urea or polyurea.

## BACKGROUND OF THE INVENTION

Halogen-containing elastomers have many properties which make them desirable for making various rubberlike products such as, for example, gaskets, hose, conveyor belts, valve seats, packings, oil seals and the like. Among such elastomers may be mentioned chloroprene rubber, chlorinated butyl rubber, chlorine-containing acrylic rubber, epichlorohydrin rubber, ethylene-epichlorohydrin copolymer rubber, chlorinated ethylene rubber, and the like. However, such elastomers are difficult to vulcanize even when they contain vulcanization sites such as active-halogen groups. It has been proposed to use an amine, an ammonium salt or an organic peroxide for vulcanizing elastomers of this type, but such vulcanizing systems have had some disadvantages such as slow cure rate, poor curing, or poor aging properties. A soap and sulfur mixture has also been proposed and while it is very suitable for many purposes, it cannot be used to advantage where a fast cure rate with maximum state of cure is required.

Trithiocyanuric acid has been used in the past as a fast curative or vulcanizing agent for elastomers having active-halogen sites. However, it has been found that trithiocyanuric acid alone does not provide truly satisfactory results. See, for example Mori et al, Vol. 57, Rubber Chemistry and Technology, pp. 34 - 37 (1984). Likewise, a dithiocarbamic acid derivative alone has been used as a vulcanizing agent for these elastomers without yielding truly satisfactory results.

While neither trithiocyanuric acid alone nor a dithiocarbamic acid derivative alone has achieved satisfactory results, commonly assigned Ermidis, U.S. 3,622,547 discloses and claims the use of a combination of the two for vulcanizing an acrylic elastomer such as one having active-halogen vulcanization sites. Such combination of effective amounts of trithiocyanuric acid with a dithiocarbamic acid derivative provides a composition which cures at a more rapid rate than prior art compositions, has a high state of cure, and provides improved aging properties to the resulting vulcanizate. However, the combination has been limited in its practical applications because it has been found that trithiocyanuric acid accelerated by a dithiocarbamic acid derivative such as zinc dibutyldithiocarbamate is too scorchy. Being scorchy means partially vulcanizing during compounding and/or during storage in bins prior to molding. This interferes with processability in the mixing equipment and presses.

It is an object of the present invention to provide novel vulcanizable halogen-containing elastomer based compositions having improved rates of cure without being scorchy. Another object of the present invention is to provide a vulcanizable comprising a halogen-containing elastomer without a tendency to pre-cure during processing and/or storage. Still another object of the present invention is to provide a vulcanizable composition comprising a halogen-containing elastomer which can be processed safely at 200°F with but which cures rapidly at 350°F to a final state of cure which does not require post curing.

## SUMMARY OF THE INVENTION

The foregoing objects and others are accomplished in accordance with the present invention by providing a vulcanizable composition containing an elastomer having active-halogen groups and a combination of trithiocyanuric acid and a substituted urea or poly(urea) compound as a latent accelerator. The vulcanization system of the present invention not only provides as good overall vulcanization results as the results attainable with the above-mentioned patent, but also has far superior bin storage stability and scorch protection.

The preferred vulcanizable compositions of the present invention comprise

(i) an elastomer having active-halogen atoms;
(ii) trithiocyanuric acid; and
(iii) a latent accelerator comprising a substituted urea compound selected from at least one of
  (a) a monourea;
  (b) a bisurea; and
  (c) a poly(urea).

Although any of the known elastomers containing active halogen groups are suitable, the preferred elastomers are acrylic elastomers having active chlorine groups.

The present invention contemplates vulcanizable compositions as set forth above in which, for acrylic elastomers, from about 0.25 to about 5.0 parts by weight of each of trithiocyanuric acid and a substituted urea compound are included per 100 parts of acrylic elastomer. For other elastomers, corresponding amounts, based on halogen-atom contents, are preferred.

According to a preferred embodiment,the substituted urea is selected from at least one compound of the group consisting of those of the formulae:

(a) 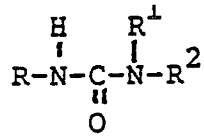 ,

(b) 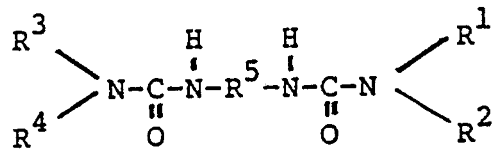 , and

(c) 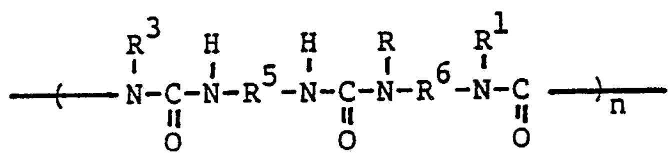 ,

wherein R is alkyl of 1 to 12 carbon atoms, aryl of 6 to 20 carbon atoms, aralkyl of 6 to 20 atoms, or alkaryl of from 6 to 20 carbon atoms, optionally substituted with chlorine, bromine, fluorine, nitro, cyano, cyanimino, hydroxyl, alkyl of from 1 to 6 carbon atoms, alkoxy of from 1 to 6 carbon atoms, aryl of from 6 to 20 carbon atoms or a mixture of any of the foregoing; $R^5$ and $R^6$ are, independently, divalent alkylene of from 1 to 12 carbon atoms, arylene of from 6 to 20 carbon atoms, aralkylene of from 6 to 20 carbon atoms, optionally substituted with chlorine, bromine, fluorine, nitro, cyano, cyanimino, hydroxyl, alkyl of from 1 to 6 carbon atoms, alkoxy of from 1 to 6 carbon atoms, aryl of from 6 to 20 carbon atoms, or a mixture of any of the foregoing; $R^1$, $R^2$, $R^3$ and $R^4$ are alkyl of from 1 to 20 carbon atoms, aralkyl of from 6 to 20 carbon atoms, cycloalkyl of from 3 to 20 carbon atoms or heterocyclic wherein $R^1$ and $R^2$ and $R^3$ and $R^4$, are joined together to form a ring, $R^2$ and $R^4$ can also be hydrogen, said $R^1$, $R^2$, $R^3$ and $R^4$ being optionally substituted with chlorine, bromine, fluorine, nitro, cyano, cyanimino, hydroxyl, alkyl of from 1 to 6 carbon atoms, alkoxy of from 1 to 6 carbon atoms, aryl of from 6 to 20 carbon atoms or a mixture of any of the foregoing; and n is an integer of from 1 to 1000.

## DETAILED DESCRIPTION OF THE INVENTION

The invention contemplates broadly all vulcanizable compositions containing any elastomer having active-halogen groups including those elastomers disclosed, for example, in U.S. Pat. Nos. 3,201,373 and 3,312,677, and in the above-mentioned Mori et al publication. Preferably the invention contemplates using acrylic elastomers prepared by polymerizing alkyl acrylates and alkoxyalkyl acrylates, for example, ethyl acrylate, butyl acrylate, methoxyethyl acrylate or a mixture of any of the foregoing, with minor amounts of various chlorine or bromine containing comonomers such as, for example, vinyl chloroacetate or chloroethyl vinyl ether. The elastomers will therefore contain halogen vulcanizing sites.

For the purposes of this invention, the substituted ureas described herein are derived from the reaction of an isocyanate and an amino compound. The reaction of an isocyanate and an amine to form a urea is well known:

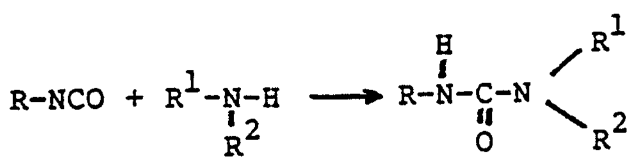

This reaction is reversable by heat if the R, $R^1$ and $R^2$ are properly selected. The temperature at which the reverse reaction occurs depends upon the structure of R, $R^1$ and $R^2$, and whether the urea is mono, bis or polymeric.

Illustrative of the isocyanates which may be used to produce a substituted urea in accordance with this invention include mono-isocyanates such as phenyl isocyanate, butyl isocyanate, and in general Ar-NCO and R-NCO, also with other radicals on Ar and R; di- and poly-isocyanates which are aromatic in nature, can be used, such as tolylenediisocyanate (TDI) metaphenylene diisocyanate (MDI), polymeric MDI, napthalene diisocyanate, etc.; and aliphatic diisocyanates can also be used, such as methylene-biscyclohexyl diisocyanate, isophorone diisocyanate (IPDI), tetramethylmeta-xylylene diisocyanate, such as TMXDI® (meta) aliphatic isocyanate (a trademark of American Cyanamid Company), trimethyl hexamethylene diisocyanate, etc. Preferred diisocyanates are made according to Bortnick, U.S. 2,692,275; Singh et al, U.S. 4,361,518; and Alexanian et al, U.S. 4,379,767.

Illustrative of the amines which may be used to produce a substituted urea in accordance with this invention include aliphatic (strong base) amines, such as mono-functional primary and secondary amines

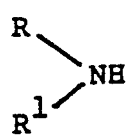

where $R^1$ is the same as R, or H and wherein R and $R^1$ may contain other radicals such as OH, Cl, and the like, di-and poly-functional amines

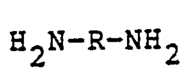 , 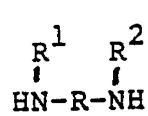

wherein R and $R^1$ may contain other radicals as defined above; and dicyandiamide

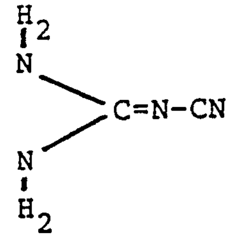 ,

and the like.

The reaction products derived from the above form substituted urea compounds of the formulae:

(a) 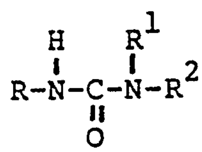 ;

(b) 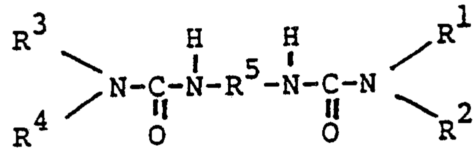 ;

(c) 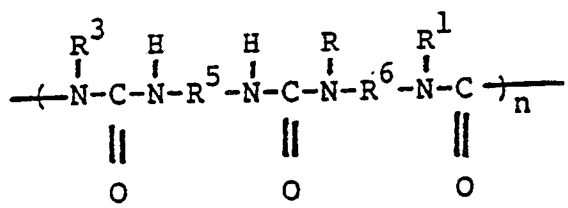 ; or

(d) a mixture of any of (a)-(c), inclusive,

wherein $R^1$, $R^2$, $R^3$, $R^4$, $R^5$ and $R^6$ are as defined above.

Preferred substituted urea compounds are those derived from the reaction product of tetramethyl-meta-xylylene diisocyanate and ethylenediamine, the reaction product of tetramethyl-meta-xylylene diisocyanate and ethanolamine, the reaction product of tetramethyl-meta-xylylene diisocyanate and benzylamine, the reaction product of isophorone diisocyanate and benzylamine, the reaction product of tetramethyl-meta-xylylene diisocyanate and butylamine and the reaction product of isophorone diisocyanate and diisopropylamine.

The amount of trithiocyanuric acid used can be any amount which will be within the range of from about twenty-five hundredths part to about five parts by weight thereof per 100 parts of elastomer in the composition. With most compositions containing an acrylic elastomer, best results are obtained with from about twenty-five hundredths part to about three parts trithiocyanuric acid, preferably from about seven tenths part to about one and one-half parts per 100 parts elastomer so an amount within this range is preferred. With the other elastomers, a corresponding amount, depending on halogen content will be used.

The amount of urea and/or polyurea compound likewise can be any amount which will provide a vulcanizable composition but will usually be from about twenty-five hundredths part to about ten parts by weight per 100 parts elastomer in the compositions. It is preferred to use from about one part to about three parts of the urea and/or polyurea compound per 100 parts elastomer. With the other elastomers, a corresponding amount, depending on halogen content, will be used.

The vulcanizable compositions provided by this invention are prepared by conventional compounding techniques. The various ingredients of the compositions may be mixed together on a two-roll mill or in a

Banbury mixer. The vulcanizable composition, in addition to the accelerator system provided by the invention, may include the conventional carbon blacks. stearic acid, fillers, antioxidants and similar materials.

The following procedures can be used to provide ureas and polyureas useful in this invention:

## PROCEDURE A

A bis-urea is prepared as follows:

(a) n-Butylamine, 24.3 g, 0.33 eg, is dissolved in 200 ml of acetone;

(b) alpha, alpha, alpha′, alpha′ -tetramethyl-meta-xylylene diisocyanate, TMXDI® (METAO American Cyanamid Company, 97% pure, 43g, 0.34 eg, is dissolved in 100 ml acetone.

Solution (b) is added dropwise to (a) with stirring, the precipitate formed is collected, washed with acetone and dried.

A poly-urea is prepared as follows:

(a) Ethylenediamine 60 g, 2 eg, is dissolved in 800 ml of acetone.

(b) TMXDI® (META) 256 g, 2.04 eg, is dissolved in 250 ml of acetone.

Solution (b) is slowly dropped into (a). The mixture is cooled with water to arrest the exotherm, the precipitate is collected, washed with acetone and dried.

All other ureas and polyureas may be generally prepared in a similar manner.

The substituted urea compounds obtained by the above processes may be used in the following examples.

## DESCRIPTION OF THE PREFERRED EMBODIMENTS

The following examples illustrate the invention, but are not intended to limit it.

## COMPARATIVE EXAMPLE 1

An acrylic elastomer, comprising 95 weight percent of ethyl acrylate copolymerized with 5 percent of vinyl chloroacetate, as described in U.S. Patent 3,622,547, is mixed in an intensive mixer with 55 parts of N-550 FEF reinforcing carbon black, 1 part of stearic acid, 2 parts of an antioxidant, phenyl-beta-naphthyl-amine, Goodyear's Wingstay® 29, and 1 part of a trithio-cyanuric acid masterbatch (70% active in poly-(ethyl acrylate) carrier) (American Cyanamid Company TCY-MBA). The above masterbatch, 159 parts, is then mixed with 1.5 parts of the prior art accelerator zinc dibutyldithiocarbamate, U.S. 3,622,547, Example X, on a standard 2-roll rubber mill until total dispersion is effected. The compounded rubber is then compression-molded at 380°F for 6 minutes. No postcure is used.

The mechanical properties including Monsanto ODR test data of the vulcanized acrylic elastomer are set forth in Table 1.

## EXAMPLE 1

The procedure of Example 1A is repeated using as the accelerator a polyurea derived from TMXDI® (meta) aliphatic isocyanate and ethanolamine. The mechanical properties of the vulcanized acrylic elastomer are set forth in Table 1.

EXAMPLE 2

The procedure of Example 1A is repeated using as the accelerator a polyurea derived from TMXDI® (meta) and ethylenediamine. The data are set forth in Table 1.

EXAMPLE 3

The procedure of Example 1A is repeated using as the accelerator a diurea derived from TMXDI® (meta) and benzyl amine. The data are set forth in Table 1.

EXAMPLE 4

The procedure of Example 1A is repeated using as the accelerator a diurea derived from isophorone diisocyanate and benzyl amine. The data are set forth in Table 1.

EXAMPLE 5

The procedure of Example 1A is repeated using as the accelerator a diurea derived from TMXDI® (meta) and butylamine. The data are set forth in Table 1.

EXAMPLE 6

The procedure of Example 1A is repeated using as the accelerator a diurea derived from isophorone diisocyanate and diisopropylamine. The data are set forth in Table 1.

TABLE 1

| Example | 1A* | 1 | 2 | 3 | 4 | 5 | 6 |
|---|---|---|---|---|---|---|---|
| Acrylic Elastomer** | 100 | 100 | 100 | 100 | 100 | 100 | 100 |
| Carbon black | 55 | 55 | 55 | 55 | 55 | 55 | 55 |
| Stearic Acid | 1 | 1 | 1 | 1 | 1 | 1 | 1 |
| phenyl-beta naphthylamine*** | 2 | 2 | 2 | 2 | 2 | 2 | 2 |
| masterbatch trimthiocyanuric acid *** | 1 | 1 | 1 | 1 | 1 | 1 | 1 |
| Accelerator a | 1.5 | - | - | - | - | - | - |
| b | - | 3 | - | - | - | - | - |
| c | - | - | 3 | - | - | - | - |
| d | - | - | - | 3 | - | - | - |
| e | - | - | - | - | 3 | - | - |
| f | - | - | - | - | - | 3 | - |
| g | - | - | - | - | - | - | 3 |

ODR, 380°F, 12" Motor, 100 Range, 3° Arc

| | | | | | | | |
|---|---|---|---|---|---|---|---|
| MH, lbf/in | 91 | 77.5 | 87 | 70 | 51 | 82 | 58 |
| ML, lbf/in | 9 | 8 | 9 | 9 | 7.5 | 10 | 10 |
| Cure Time, (90%)Min | 3.4 | 5.4 | 6 | 8.8 | 10 | 6.6 | 4.8 |
| $T_s2$, Scorch, Min | 1 | .9 | 1.1 | 1 | 2 | .8 | .8 |
| Cure Rate Index | 33 | 15 | 15.51 | 7.56 | 5.19 | 12.07 | 11.50 |

Presscure: 6 min at 380°F
Postcure: None

Original Properties

| | | | | | | | |
|---|---|---|---|---|---|---|---|
| Shore A Hardness | 71 | 65 | 65 | 60 | 64 | 60 | 63 |
| 100% Modulus, psi | 1140 | 940 | 820 | 520 | 340 | 820 | 710 |
| Tensile Strength, psi | 1610 | 1320 | 1520 | 1390 | 1150 | 1520 | 1380 |
| Elongation, % | 184 | 148 | 209 | 320 | 460 | 236 | 221 |

TABLE 1, continued

| Compression Set, B | 1A* | 1 | 2 | 3 | 4 | 5 | 6 |
|---|---|---|---|---|---|---|---|
| 70 Hrs. at 150°C, % | 20 | 34 | 20 | 20 | 26 | 21 | 32 |

*Control
** CYANACRYL® R American Cyanamid Company
*** WINGSTAY® 29 Antioxidant, Goodyear Chemical Company
**** TCY-MBA American Cyanamid Company

a - Zinc dibutyldithiocarbamate
b - Polyurea from TMXDI® (META) aliphatic isocyanate and ethanolamine
c - Polyurea from TMXDI® (META) and ethylenediamine
d - Diurea from TMXDI® (META) and benzylamine
e - Diurea from isophorone diisocyanate and benzylamine
f - Diurea from TMDI® (META) and butylamine
g - Diurea from isophorone diisocyanate and diisopropylamine

The date in Table 1 demonstrate that the urea compounds accelerate the TCY care.

EXAMPLES 7 AND 8

The same general procedure was used as in Example 1A except that two levels of polyurea were used. The results are set forth in Table 2.

TABLE 2

| Compound Formula | 1A* | 7 | 8 |
|---|---|---|---|
| CYANACRYL® R Acrylic Elastomer | 100 | 100 | 100 |
| Carbon black | 55 | 55 | 55 |
| Stearic Acid | 1 | 1 | 1 |
| Wingstay® 29, Antioxidant | 2 | 2 | 2 |
| Masterbatch trithiocyanuric acid | 1 | 1 | 1 |
| Zinc dibutyldithiocarbamate | 1.5 | - | - |
| Ethylene diamine polyurea of TMDI® (META)[c] | - | 3 | 6 |
| **ODR, 380°F, 12' Motor, 100 Range, 3° Arc on Fresh Rubber Stock** | | | |
| MH, lbf/in | 88 | 90 | 81 |
| ML, lbf/in | 9 | 8 | 8 |
| Cure Time, (90%) Min | 3.1 | 6 | 6 |
| $T_s2$, Scorch, Min | 1 | 1.1 | .7 |
| Cure Rate Index | 38 | 16 | 13.4 |
| **Mooney Scorch, 250°F After Storage of Rubber Stock for 2 Weeks at 50% RH and 73°F** | | | |
| MV, lbf/in | 44 | 43 | 48 |
| $T_5$, Min | 11.6 | 62 | 28 |
| $T_{35}$, Min | 23.7 | greater than 100 | 98 |
| Presscure: 6 min at 380°F | | | |
| Postcure: None | | | |
| **Original Properties** | | | |
| Shore A Hardness | 68 | 66 | 69 |
| 100% Modulus, psi | 910 | 930 | 950 |
| Tensil Strength, psi | 1440 | 1490 | 1440 |
| Elongation, % | 181 | 176 | 166 |

* Control
c See footnotes to Table 1

The results in Table 2 show that when the rubber stock was stored for two weeks, the polyurea accelerated stock was still stable and devoid of scorch. At 250 °F, a temperature region at which rubber stock is usually mixed the stock was very slow but at 380 °F a temperature region at which rubber stock is usually compression molded it was sufficiently active to effect complete cure in 6 minutes. Because of such behavior --safe processing and yet a fast cure characteristic at elevated temperature -- there is no need to post cure the molded article. The Mooney scorch data demonstrate that the prior art compositions begins to pre-vulcanize at temperature regions at which rubber stock is usually mixed.

## EXAMPLE 9

Using the general procedure of Example 1A 2 parts of polyurea TMXDI® (meta) aliphatic isocyanate and ethylenediamine was compared to zinc dibutyl-dithiocarbamate. The results are set forth in Table 3.

TABLE 3

| Compound Masterbatch | 1A* | 9 |
|---|---|---|
| CYANACRYL® Acrylic Elastomer | 100 | 100 |
| Carbon black | 55 | 55 |
| Stearic acid | 1 | 1 |
| Antioxidant | 2 | 2 |
| Trithiocyanuric acid masterbatch | 1 | 1 |
| Zinc Dibutyldithiocarbamate | 1.5 | - |
| Polyurea from TMXDI® (META) aliphatic diisocyanate and ethylenediamine $^c$ | - | 2 |
| **ODR, 380°F, 12' Motor, 100 Range, 3° Arc** | | |
| MH, lbf/in | 61 | 66 |
| ML, lbf/in | 8.5 | 12 |
| Cure Time, (90%) Min | 3.2 | 6.6 |
| $T_s2$, Scorch, Min | 1.2 | 1.0 |
| Cure Rate In | 25.9 | 11.3 |
| **ODR, 380°F, 12' Motor, 100 Range, 3° Arc After One month Storage of Stock at 50% RN and 73°F** | | |
| MH, lbf/in | 92 | 67 |
| ML, lbf/in | 30 | 9.5 |
| Cure Time, (90%) Min | 3.6 | 3.9 |
| $T_s2$, Scorch, Min | .65 | 1.5 |
| Cure Rate Index | 20.3 | 23.1 |
| **Mooney Scorch, 250°C, After One Month Storage of Stock at 50% RN and 73°F** | | |
| MV, lbf/in | 40 | 71 |
| $T_5$, Min | 19 | 26 |
| $T_{35}$, Min | 33 | Greater than 100 |
| Presscure: | 6 min | 6 min |
| Postcure: | None | None |

TABLE 3, continued

| Original Properties | 1A | 9 |
|---|---|---|
| Shore A Hardness | 65 | 63 |
| 100% Modulus, psi | 800 | 890 |
| Tensile Strength, psi | 1600 | 1640 |
| Elongation, % | 224 | 210 |
| **Compression Set, B** | | |
| 70 Hrs. @ 150°C, % | 36 | 25 |

* Control
c See footnotes for Table 1

The results in Table 3 demonstrate that after storage of the rubber stocks one month at 50% RH and 73°F, the polyurea accelerated stock remained unchanged judging by the Monsanto ODR curve. The Mooney scorch data showed a fairly inert stock at 250°F. The prior art stock (1A*) in contrast changed during storage and was not inert during the Mooney scorch test. The rheometer data indicated that the prior art stock stiffened to an ML of 30 at 380°F whereas the stock according to this invention was much more inert. The scorch time of the prior art stock was much lower.

The above mentioned patents, publication(s) and test methods are incorporated herein by reference.

Many variations will suggest themselves to those skilled in the art in light of the foreging detailed description. For example, as latent accelerator there can be used a monourea from phenyl isocyanate and n-butylamine. Instead of a copolymer of ethyl acrylate and vinyl chloroacetate, CYANACRYL® R, there can be used a terpolymer of ethyl acrylate, butyl acrylate and vinyl chloroacetate, CYANACRYL® R, or a tetrapolymer of ethylacrylate, butyl acrylate, methoxyethyl acrylate and vinyl chloroacetate, CYANACRYL® 35 and 40. Instead of a chlorine-containing acrylic rubber, a bromine-containing acrylic rubber can be used. The elastomer can also comprise chloroprene rubber, chlorinated butyl rubber Butyl HT, Exxon; epichlorohydin rubber, chlorinated ethylene rubber, e.g., Hercules HERCHLOR® elastomer, mixtures thereof, and the like. All such obvious variations are within the full intended scope of the appended claims.

## Claims

1. A vulcanizable composition comprising:
(i) an elastomer having active-halogen atoms;
(ii) trithiocyanuric acid; and
(iii) a latent accelerator comprising a substituted urea compound selected from at least one of the following:
(a) a monourea;
(b) a bisurea; and
(c) a poly(urea)

2. A composition as defined in Claim 1 wherein component (i) comprises an acrylic elastomer.

3. A composition as defined in Claim 2 wherein from about 0.25 to about 5.0 parts by weight of each of trithiocyanuric acid (ii) and of substituted urea compound (iii) per 100 parts of acrylic elastomer (i) are included in the compositions.

4. A composition as defined in Claim 1 wherein the substituted urea comprising at least one compound of the group consisting of those of the formulae:

(a) 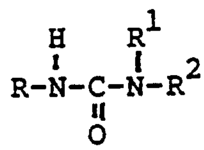 ,

(b) 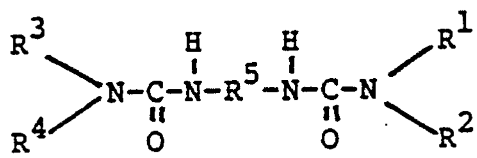 , and

(c) 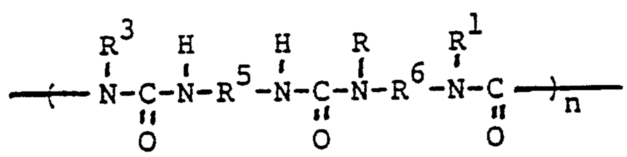 ,

wherein R is alkyl of 1 to 12 carbon atoms, aryl of 6 to 20 carbon atoms, aralkyl of 6 to 20 atoms, or alkaryl of from 6 to 20 carbon atoms, optionally substituted with chlorine, bromine, fluorine, nitro, cyano, cyanimino, hydroxyl, alkyl of from 1 to 6 carbon atoms, alkoxy of from 1 to 6 carbon atoms, aryl of from 6 to 20 carbon atoms or a mixture of any of the foregoing; $R^5$ and $R^6$ are, independently, divalent alkylene of from 1 to 12 carbon atoms, arylene of from 6 to 20 carbon atoms, aralkylene of from 6 to 20 carbon atoms, optionally substituted with chlorine, bromine, fluorine, nitro, cyano, cyanimino, hydroxyl, alkyl of from 1 to 6 carbon atoms, alkoxy of from 1 to 6 carbon atoms, aryl of from 6 to 20 carbon atoms, or a mixture of any of the foregoing; $R^1$, $R^2$, $R^3$ and $R^4$ are alkyl of from 1 to 20 carbon atoms, aralkyl of from 6 to 20 carbon atoms, cycloalkyl of from 3 to 20 carbon atoms or heterocyclic wherein $R^1$ and $R^2$ and $R^3$ and $R^4$ are joined together to form a ring, $R^2$ and $R^4$ can also be hydrogen, said $R^1$, $R^2$, $R^3$ and $R^4$ being optionally substituted with chlorine, bromine, fluorine, nitro, cyano, cyanimino, hydroxyl, alkyl of from 1 to 6 carbon atoms, alkoxy of from 1 to 6 carbon atoms, aryl of from 6 to 20 carbon atoms or a mixture of any of the foregoing; and n is an integer of from 1 to 1000.

5. A composition as defined in Claim 1 wherein said substituted urea comprises the reaction product of tetramethyl-meta-xylylene diisocyanate and ethylene-diamine.

6. A composition as defined in Claim 1 wherein said substituted urea comprises the reaction product of tetramethylene-meta-xylene diisocyanate and ethanolamine.

7. A composition as defined in Claim 1 wherein said substituted urea comprises the reaction product of tetramethyl-meta-xylylene diisocyanate and benzylamine.

8. A compositon as defined in Claim 1 wherein said substituted urea comprises the reaction product isophorone diisocyanate and benzylamine.

9. A composition as defined in Claim 1 wherein said substituted urea comprises the reaction product of tetramethyl-meta-xylylene diisocyanate and butylamine.

10. A composition as defined in Claim 1 wherein said substituted urea comprises the reaction product of isophorone diisocyanate and diisopropylamine.

11. A composition as defined in Claim 2 wherein said acrylic elastomer (i) comprises a copolymer comprising ethyl acrylate and a minor proportion of vinyl chloroacetate.

12. A composition as defined in Claim 2 wherein said acrylic elastomer (i) comprises a terpolymer comprising ethyl acrylate, butyl acrylate and a minor proportion of vinyl chloroacetate.

13. A composition as defined in Claim 2 wherein said acrylic elastomer (i) comprises a tetrapolymer comprising ethyl acrylate, butyl acrylate, and methoxyethyl acrylate and a minor proportion of vinyl chloroacetate.

14. A vulcanized elastomer comprising a heat-cured composition as defined in Claim 1.

15. In. a process for the preparation of a vulcanized elastomer comprising heat-curing a vulcanizable composition comprising:

(i) an elastomer having active-halogen atoms; and

(ii) trithiocyanuric acid, the improvement which comprises including in said composition an effective amount of

(iii) a latent accelerator comprising a substituted urea compound selected from at least one of the following:

(a) a monourea:

(b) a bisurea; and

(c) a poly(urea)

16. A shaped article comprising a vulcanized elastomer as defined in Claim 14.

17. A shaped article as defined in Claim 16 comprising a gasket.

18. A shaped article as defined in Claim 16 comprising a hose.

19. A shaped article as defined in Claim 16 comprising a conveyor belt.

20. A shaped article as defined in Claim 16 comprising a valve seat.

21. A shaped article as defined in Claim 16 comprising a packing.

22. A shaped article as defined in Claim 16 comprising an oil seal.

European Patent Office

# EUROPEAN SEARCH REPORT

Application Number

EP 88 11 3701

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 804 450 (NAYLOR)<br>* Claims 1,5; example 4 *<br>--- | 1 | C 08 K 5/21<br>C 08 K 5/37<br>C 08 L 57/08<br>C 08 L 33/08 |
| A | ELASTOMERICS, vol. 115, no. 12, December 1983, pages 17-21, New York, US; J.J. McMONAGLE et al.: "TCY: A non-postcure vulcanizing agent for acrylic elastomers"<br>----- | 1 | |
| | | | **TECHNICAL FIELDS SEARCHED (Int. Cl.4)** |
| | | | C 08 K<br>C 08 L |

The present search report has been drawn up for all claims

| Place of search | Date of completion of the search | Examiner |
|---|---|---|
| THE HAGUE | 11-01-1989 | SCHUELER D.H.H. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)